# EUROPEAN PATENT SPECIFICATION

(11) **EP 3 431 264 B1**
(45) Date of publication and mention of the grant of the patent: **04.03.2020**
(21) Application number: 17182643.1
(22) Date of filing: 21.07.2017
(51) Int. Cl.: B29C 64/371, B29C 64/393, B33Y 30/00, B33Y 50/02, B29C 64/153, B29C 64/268, G01P 5/00

(54) **APPARATUS FOR ADDITEVELY MANUFACTURING THREE-DIMENSIONAL OBJECTS**
VORRICHTUNG ZUR GENERATIVEN FERTIGUNG VON DREIDIMENSIONALEN GEGENSTÄNDEN
APPAREIL DE FABRICATION ADDITIVE D'OBJETS TRIDIMENSIONNELS

(43) Date of publication of application: 23.01.2019
(73) Proprietor: CL Schutzrechtsverwaltungs GmbH, 96215 Lichtenfels (DE)
(72) Inventor: Döhler, Tim, 96269 Großheirath (DE)
(74) Representative: Hafner & Kohl Patent- und Rechtsanwälte Partnerschaft mbB

(56) References cited:
- DE-A1- 4 130 627
- US-A- 4 919 536
- US-A1- 2014 301 883

## Description

The invention relates to an apparatus for additively manufacturing three-dimensional objects by means of successive layerwise selective irradiation and consolidation of layers of a build material which can be consolidated by means of an energy beam according to claim 1.

Respective apparatuses for additively manufacturing three-dimensional objects are known and may be embodied as selective laser sintering apparatuses, selective laser melting apparatuses or selective electron beam melting apparatuses, for instance.

It is also known that respective apparatuses comprise a gas stream generating device configured to generate a gas stream at least partly streaming through the process chamber during operation of the apparatus, the gas stream being charged with non-consolidated build material particles, particularly smoke or smoke residues generated during operation of the apparatus, while streaming through the process chamber.

The streaming properties of a respective gas stream have an influence on the quality of the additive build process and thus, the quality of the objects to be additively built. Hence, an exact determination of the streaming properties of a respective gas stream is of significant value for the quality of the additive build process and the quality of the objects to be additively built.

Hitherto, the streaming properties of a respective gas stream are typically determined in tubes, pipes, etc. through which the gas stream streams before entering the process chamber and/or after exiting the process chamber. A direct determination of the streaming properties of the gas stream in the process chamber, i.e. while the gas stream streams through the process chamber, allowing for an improved determination of the streaming properties is typically not conducted.

US 2014 / 301 883 A1 discloses an apparatus for additively manufacturing three-dimensional objects, wherein gas can be supplied from a gas source to a process chamber via a supply line and gas containing particulate impurities can be discharged from the process chamber via a discharge line. An actual flow rate of the gas stream flowing through the process chamber can be detected by a detection device comprising a gas flow rate sensor disposed in the discharge line.

In view of the above, it is the object of the invention to provide an apparatus for additively manufacturing of three-dimensional objects allowing for an improved determination of the streaming properties of the gas stream while streaming through the process chamber.

This object is achieved by an apparatus for additively manufacturing three-dimensional objects according to independent Claim 1. The dependent claims relate to possible embodiments of the apparatus according to independent Claim 1.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus comprises a number of structural and/or functional units. Exemplary structural and/or functional units are a process chamber comprising a build plane in which layers of build material are successively layerwise selectively irradiated and consolidated by means of an energy beam during operation of the apparatus, an irradiating device which is configured to selectively irradiate a build material layer disposed in the process chamber with at least one energy beam, and a gas stream generating device, which may be built as or may comprise a sucking and/or blowing device, which is configured to generate a gas stream at least partly streaming through the process chamber. The gas stream is capable of being charged with non-consolidated build material particles, particularly smoke or smoke residues generated during operation of the apparatus, while streaming through the process chamber. The gas stream is typically inert, i.e. typically a stream of an inert gas, e.g. argon, nitrogen, carbon dioxide, etc.

The apparatus further comprises an optical determining device configured to optically determine at least one parameter suitable for characterizing the streaming behavior or the streaming properties, respectively of the gas stream streaming through the process chamber during operation of the apparatus, i.e. typically during a build job in which at least one three-dimensional object is additively built, at one or more definable or defined location(s) within the process chamber. Thus, the optical determining device is configured to optically determine at least one parameter suitable for characterizing the streaming properties of the gas stream streaming through the process chamber during operation of the apparatus not outside, but directly inside the process chamber. The optical determining device is therefore, configured to directly monitor the streaming properties of the gas stream directly inside the process chamber, i.e. while the gas stream streams through the process chamber, during operation of the apparatus. Hence, the optical determining device is capable of providing direct and extensive, in particular timely and spatially resolved, information about the streaming properties of the gas stream inside the process chamber.

As will be apparent from the following description of embodiments of the apparatus, the locations at which the at least one parameter suitable for characterizing the streaming properties of the gas stream are determined may be arbitrarily chosen, i.e. in particular arbitrarily spatially distributed, within the process chamber allowing for comprehensive information on the streaming properties at arbitrary locations within the process chamber.

Compared with known principles for determining the streaming properties of a respective gas stream which are typically based on determining the streaming properties in tubes, pipes, etc. through which the gas stream streams before entering the process chamber and/or after exiting the process chamber, the optical determining device allows for a direct determination of the streaming properties of the gas stream inside the process chamber, i.e. while the gas stream streams through the process chamber, resulting in an improved determination of the streaming properties of the gas stream.

As a result, an apparatus for additively manufacturing of three-dimensional objects allowing for an improved determination of the streaming properties of the gas stream while streaming through the process chamber is given.

A respective parameter suitable for characterizing the streaming properties of the gas stream may be the streaming velocity, the streaming profile, etc. Both the streaming velocity and the streaming profile allow for a comprehensive insight on the streaming properties of the gas stream while streaming through the process chamber. Of course, changes, distributions, gradients, etc. of the respective parameter, e.g. streaming velocity, streaming profile, etc., suitable for characterizing the streaming properties of the gas stream can be determined.

The optical determining device comprises at least one optical measuring unit configured to optically measure at least one measurement value within the process chamber, the measurement value being related to the gas stream, and at least one analysis and/or evaluating unit ("evaluating unit") configured to analyze and/or evaluate measurement values measured by the optical measuring unit so as to determine the at least one parameter suitable for characterizing the streaming properties of the gas stream streaming through the process chamber during operation of the apparatus at at least one defined location within the process chamber. The optical measuring unit is configured to provide measurement values related to the gas stream which can be analyzed and/or evaluated so as to determine respective parameters suitable for characterizing the streaming properties of the gas stream, the evaluating unit is configured to analyze and/or evaluate respective measurement values related to the gas stream so as to determine respective parameters suitable for characterizing the streaming properties of the gas stream. Both the optical measuring unit and the evaluating unit may be embodied in soft- and/or hardware or may comprise diverse sub-units embodied in soft- and/or hardware, respectively.

The optical measuring unit is configured to measure respective measurement values at different locations within the process chamber. The optical measuring unit is also configured to measure a plurality of measurement values at different locations within the process chamber. In other words, the optical measuring unit may be configured to measure a first measurement value at a first location having first spatial coordinates within the process chamber and (simultaneously or subsequently) measure at least one further measurement value at at least one further location having further spatial coordinates within the process chamber. Hence, the location at which a measurement value is measured can be automatically or manually arbitrarily defined, chosen, changed, etc. Taking measurement values at different locations within the process chamber allows for creating a multi-dimensional information on the streaming properties of the gas stream while streaming through the process chamber. Number and coordinates of respective locations at which respective measurement values are measured can be arbitrarily defined, chosen, changed, etc.

The evaluating unit may be configured to evaluate the plurality of measurement values so as to determine the at least one parameter suitable for characterizing the streaming properties of the gas stream in at least one multi-dimensional representation of the streaming properties of the gas stream streaming through the process chamber during operation of the apparatus. The multi-dimensional representation may be a real-time representation. The multi-dimensional representation may refer to a two-dimensional (spatial) representation of the parameter in at least one sub-volume of the process chamber and thus, a two-dimensional (spatial) representation of the streaming properties of the gas stream streaming through at least one sub-volume of the process chamber during operation of the apparatus or a three-dimensional (spatial) representation of the streaming properties of the parameter in at least one sub-volume of the process chamber and thus, a three-dimensional (spatial) representation of the gas stream streaming through at least one sub-volume of the process chamber during operation of the apparatus. In either case, changes, gradients, etc. of any respective multi-dimensional representation can be determined so as to determine a timely and/or locally resolved representation of the streaming properties of the gas stream streaming through the process chamber during operation of the apparatus.

The optical determining device may be configured to optically determine the at least one parameter suitable for characterizing the streaming properties of the gas stream on basis of laser-doppler-anemometry and/or on basis of light-sectioning. Both the principles of laser-doppler-anemometry and light-sectioning allow for a highly resolved determination of the streaming properties of the gas stream.

The principle of laser-doppler-anemometry typically comprises detecting and analyzing/evaluating scattered light signals generated at tracer particles within a gas stream to be evaluated/analyzed (in context with the present apparatus, respective non-consolidated build material particles may serve as respective tracer particles), when the gas stream containing the tracer particles passes through a measurement region/volume. The measurement region/volume is typically an intersecting point of pre-definable coordinates at which measurement beams intersecting each other. By analyzing/evaluating measured intensity modulations in the scattered light signals and/or measured changes of intensity modulations in the scattered light signals, the velocity of the tracer particles and the gas stream, respectively and thus, the streaming properties of the gas stream may be determined. Laser-doppler-anemometry allows for a both timely and spatially highly resolved characterization of the streaming properties of the gas stream.

The principle of light-sectioning typically comprises detecting and analyzing/evaluating pulsed light sections of defined duration (per pulse) and with a defined time-shift exposed in a measurement region/volume. By analyzing/evaluating the detected light sections, the path of tracer particles within a gas stream to be evaluated/analyzed (in context with the present apparatus, respective non-consolidated build material particles may serve as respective tracer particle) may be determined by means of known correlation algorithms, methods, etc. Knowing the time-shift and the path of the tracer particles, the velocity of the tracer particles and the gas stream, respectively and thus, the streaming properties of the gas stream may be determined. Light sectioning also allows for a both timely and spatially highly resolved characterization of the streaming properties of the gas stream.

If the optical determining device is configured to optically determine the at least one parameter suitable for characterizing the streaming properties of the gas stream on basis of laser-doppler-anemometry, the or at least one optical measuring unit being configured to optically measure at least one measurement value within the process chamber, the measurement value being related to the gas stream, may comprise a measurement beam generating unit configured to generate a plurality of measurement beams, e.g. laser beams, intersecting each other at an intersecting point of pre-definable coordinates within the process chamber and an optical detecting unit configured to detect the intersecting point of the measurement beams within the process chamber.

The measurement beam generating unit may be configured to generate a first plurality of measurement beams intersecting each other at a first intersecting point of pre-definable coordinates within the process chamber and configured to generate a second plurality of measurement beams intersecting each other at a second intersecting point of pre-definable coordinates within the process chamber. Respective first and second pluralities of measurement beams may be generated in simultaneous or timely shifted manner. The optical detecting unit may be configured to detect the first and second intersecting points of the measurement beams within the process chamber.

An exemplary configuration of an optical measuring unit configured to perform laser-doppler-anemometry measurements may comprise a measurement beam generating unit, an optical assembly, and an optical detecting unit.

The measurement beam generating unit is configured to generate at least one measurement beam. The measurement beam generating unit may comprise a measurement beam generating source, e.g. a laser source, configured to generate at least one measurement beam, e.g. a laser beam.

The optical assembly is configured to generate a plurality of measurement beams intersecting each other at arbitrary intersecting points within the process chamber. The optical assembly may be configured to generate measurement beams which extend in a vertical direction, i.e. typically in a (substantially) parallel direction to the energy beam used for selectively irradiating and consolidating build material, through the process chamber. The optical assembly may comprise a measurement beam splitter configured to split a measurement beam generated by the measurement beam generating unit in a plurality of measurement beams, an optical modulator, e.g. Bragg-cells, configured to modulate the measurement beams generated by the measurement beam splitter, and at least one optical refractor (lens). The optical refractor may be movably supported in at least one translatory and/or rotatory degree of freedom of motion so as to arbitrarily change the intersecting point of the measurement beams within the process chamber by being moved in the respective degree of freedom of motion. The optical refractor may form part of or be disposed in front of a beam entrance window allowing for the split and modulated measurement beams to enter the process chamber. The beam entrance window may also be movably supported in at least one respective degree of freedom of motion. The beam entrance window may be arranged in a horizontally extending process chamber wall (top-wall).

The optical detecting unit is configured to detect an intersecting point of the measurement beams within the process chamber. The optical detecting unit may comprise at least one optical detector, e.g. a photo diode or photo multiplier. The optical detector may be movably supported in at least one translatory and/or rotatory degree of freedom of motion so as to arbitrarily change the detection region/volume in order to assure detection of the intersecting points of the measurement beams at different locations within the process chamber by being moved in the respective degree of freedom of motion. The optical detector may form part of or be disposed in front of a detection window allowing for detecting of intersecting points of the measurement beams at different locations within the process chamber. The detection window may also be movably supported in at least one respective degree of freedom of motion. The beam entrance window may be arranged in a vertically extending process chamber wall (side-wall).

Of course, an evaluating unit configured to evaluate the measurement values so as to determine the at least one parameter suitable for characterizing the streaming properties of the gas stream is assigned to the optical detecting unit.

If the optical determining device is configured to optically determine the at least one parameter suitable for characterizing the streaming properties of the gas stream streaming on basis of light-sectioning, the or at least one optical measuring unit configured to optically measure at least one measurement value within the process chamber, the measurement value being related to the gas stream, may comprise a measurement beam generating unit configured to generate at least one pulsed measurement beam, e.g. a pulsed laser beam, extending through the process chamber, particularly parallel to the build plane, and an optical detecting unit configured to detect scattered light generated by interactions between the measurement beam and the gas stream, in particular interactions between the measurement beam and non-consolidated build material particles within the gas stream, in at least one detection region/volume within the process chamber.

An exemplary configuration of an optical measuring unit configured to perform light-sectioning measurements may comprise a measurement beam generating unit and an optical detecting unit.

The measurement beam generating unit is configured to generate at least one pulsed measurement beam. The measurement beam generating unit may comprise a measurement beam generating source, e.g. a laser source, configured to generate at least one pulsed measurement beam, e.g. a pulsed laser beam. The measurement beam generating unit is typically configured to generate measurement beams which extend in a horizontal direction/plane through the process chamber, i.e. typically in a (substantially) perpendicular direction to the energy beam used for selectively irradiating and consolidating build material, through the process chamber. The measurement beam generating unit may be movably supported in at least one translatory and/or rotatory degree of freedom of motion so as to arbitrarily change the plane in which the pulsed measurement beams extend within the process chamber by being moved in the respective degree of freedom of motion. The measurement beam generating unit may form part of or be disposed in front of a beam entrance window allowing for the measurement beams to enter the process chamber. The beam entrance window may also be movably supported in at least one respective degree of freedom of motion. The beam entrance window may be arranged in a vertically extending process chamber wall (side-wall).

The optical detecting unit is configured to detect tracer particles - as mentioned above typically non-consolidated build material particles within the gas stream - in a detection plane, i.e. the plane in which the measurement beams extend, within the process chamber. The optical detecting unit may comprise at least one optical detector, e.g. a camera. The optical detector may be movably supported in at least one translatory and/or rotatory degree of freedom of motion so as to arbitrarily change the detection plane in order to assure detection of tracer particles in different detection planes within the process chamber by being moved in the respective degree of freedom of motion. The optical detector may form part of or be disposed in front of a detection window allowing for detecting of tracer particles at different detecting planes within the process chamber. The detection window may also be movably supported in at least one respective degree of freedom of motion. The detection window may be arranged in a horizontally extending process chamber wall (top-wall).
Of course, an evaluating unit configured to evaluate the measurement values so as to determine the at least one parameter suitable for characterizing the streaming properties of the gas stream is assigned to the optical detecting unit.
In either case, the stream generating unit may be configured to control the streaming properties, e.g. the streaming velocity, of the gas stream on basis of the at least one determined parameter suitable for characterizing the streaming properties of the gas stream. Hence, on basis of the information on the streaming properties of the gas stream within the process chamber, a control loop may be implemented so as to control the streaming properties of the gas stream, i.e. to assure/maintain a gas stream with desired streaming properties resulting in improved quality of the additive build process and thus, the quality of the objects to be additively built.
The apparatus may further comprise an output interface unit configured to output the at least one determined parameter suitable for characterizing the streaming properties of the gas stream or the streaming properties of the gas stream, respectively, particularly in at least one multi-dimensional representation of the streaming properties of the gas stream. The output interface unit may comprise a graphical interface, e.g. a display, allowing for outputting a graphical representation of the output and/or may comprise a communication interface allowing for communicating a the output via a communication link, e.g. a communication network, to at least one communication partner.

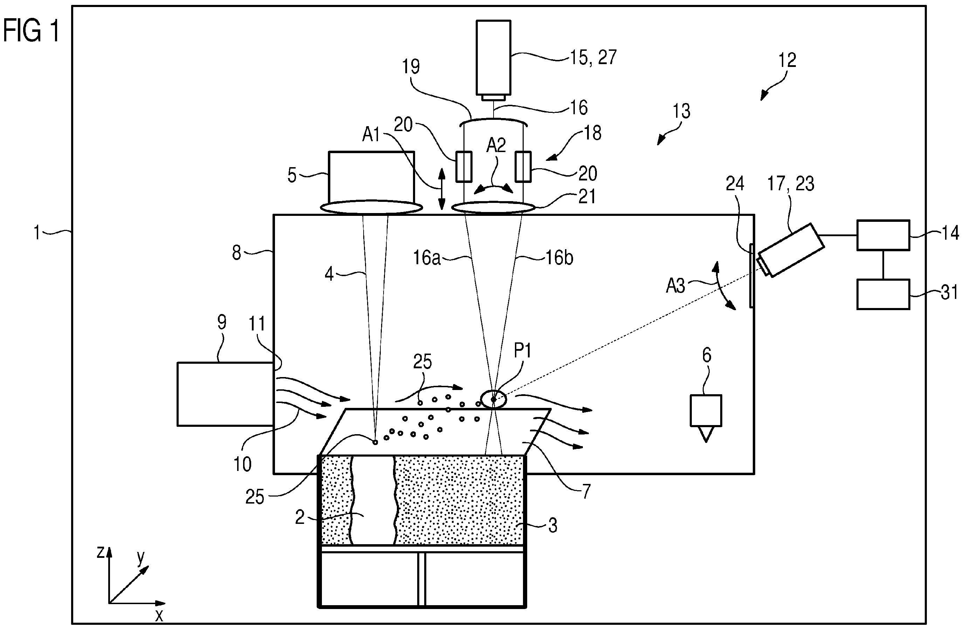

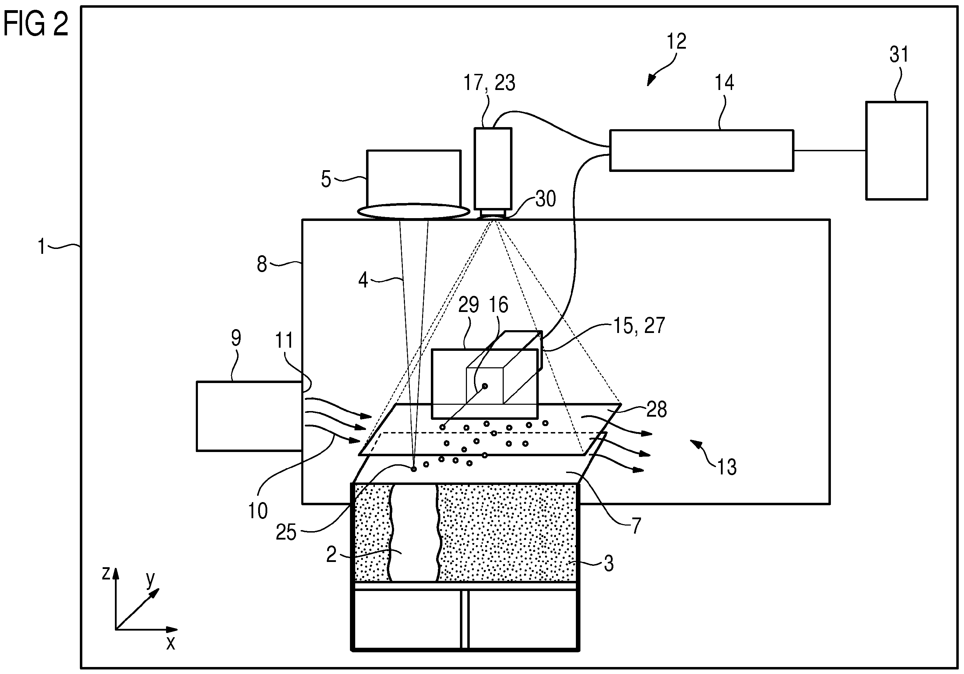

Exemplary embodiments of the invention are described with reference to the Fig., whereby
Fig. 1, 2 each show a principle drawing of an apparatus for additively manufacturing three-dimensional objects according to an exemplary embodiment.

Fig. 1, 2 each show a principle drawing of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of an energy beam 4, e.g. a laser beam or an electron beam. The apparatus 1 can be a selective laser melting apparatus or a selective electron beam melting apparatus, for instance.
The apparatus 1 comprises a number of structural and/or functional units.
One exemplary functional unit is an irradiation device 5, particularly an energy beam generating device and/or an energy beam deflecting device, e.g. a scanning device, which serves for selectively irradiating build material layers with at least one energy beam 4.

Another exemplary functional unit is a build material application device 6, particularly a coating device, serving for applying a layer of build material 3, e.g. in a build plane 7 of a process chamber 8 of the apparatus 1.

Another exemplary functional unit is a stream generating device 9, e.g. a sucking and/or blowing device, which is configured to generate a gas stream (indicated by arrows 10) streaming through the process chamber 8, i.e. between an process chamber gas inlet 11 and a process chamber gas outlet (not shown). The gas stream is capable of being charged with non-consolidated build material particles 25, particularly smoke or smoke residues generated during operation of the apparatus 1, while streaming through the process chamber 8. The gaseous fluid stream is inert, i.e. a stream of an inert gas, e.g. argon, nitrogen, carbon dioxide, etc.

The apparatus 1 further comprises an optical determining device 12 configured to optically determine at least one parameter suitable for characterizing the streaming behavior or the streaming properties, respectively of the gas stream streaming through the process chamber 8 during operation of the apparatus 1 at one or more definable or defined location(s) within the process chamber 8. The optical determining device 12 is configured to optically determine respective parameters suitable for characterizing the streaming properties of the gas stream directly inside the process chamber 8. The optical determining device 12 is therefore, configured to directly monitor the streaming properties of the gas stream directly inside the process chamber 8. Hence, the optical determining device is capable of providing direct and extensive information about the streaming properties of the gas stream inside the process chamber 8.

A respective parameter suitable for characterizing the streaming properties of the gas stream may be the streaming velocity, the streaming profile, etc. Of course, changes, distributions, gradients, etc. of the respective parameter, e.g. streaming velocity, streaming profile, etc., suitable for characterizing the streaming properties of the gas stream can be determined.

The optical determining device 12 comprises an optical measuring unit 13 configured to optically measure at least one measurement value within the process chamber 8, the measurement value being related to the gas stream, and an analysis and/or evaluating unit 14 ("evaluating unit") configured to analyze and/or evaluate measurement values measured by the optical measuring unit 13 so as to determine the respective parameter suitable for characterizing the streaming properties of the gas stream. In other words, the optical measuring unit 13 is configured to provide measurement values related to the gas stream which can be analyzed and/or evaluated so as to determine respective parameters suitable for characterizing the streaming properties of the gas stream, the evaluating unit 14 is configured to analyze and/or evaluate respective measurement values related to the gas stream so as to determine respective parameters suitable for characterizing the streaming properties of the gas stream.

The optical measuring unit 13 is configured to measure respective measurement values at different locations within the process chamber 8. The optical measuring unit 13 is also configured to measure a plurality of measurement values at different locations within the process chamber 8. In other words, the optical measuring unit 13 is configured to measure a first measurement value at a first location having first spatial coordinates within the process chamber 8 and (simultaneously or subsequently) measure at least one further measurement value at at least one further location having further spatial coordinates within the process chamber 8. Hence, the location at which a measurement value is measured can be automatically or manually arbitrarily defined, chosen, changed, etc.

The evaluating unit 14 is configured to evaluate the plurality of measurement values so as to determine the respective parameter suitable for characterizing the streaming properties of the gas stream in at least one multi-dimensional representation of the streaming properties of the gas stream streaming through the process chamber 8. The multi-dimensional representation may be a real-time representation.

According to the exemplary embodiment of Fig. 1, the optical determining device 12 is configured to optically determine the parameter suitable for characterizing the streaming properties of the gas stream on basis of laser-doppler-anemometry.

According to this embodiment, the optical measuring unit 13 comprises a measurement beam generating unit 15 configured to generate a plurality of measurement beams 16, 16a, 16b intersecting each other at an intersecting point P1 of pre-definable coordinates within the process chamber 8 and an optical detecting unit 17 configured to detect the intersecting point P1 of the measurement beams 16, 16a, 16b within the process chamber 8.

The measurement beam generating unit 15 may be configured to generate a first plurality of measurement beams 16, 16a, 16b intersecting each other at a first intersecting point P1 of pre-definable coordinates within the process chamber 8 and configured to generate a second plurality of measurement beams intersecting each other at a second intersecting point of pre-definable coordinates within the process chamber 8. Respective first and second pluralities of measurement beams may be generated in simultaneous or timely shifted manner. The optical detecting unit 17 may be configured to detect the first and second intersecting points of the measurement beams within the process chamber 8.

Fig. 1 shows an exemplary configuration of the optical measuring unit 13. According to this exemplary configuration, the optical measuring unit 13 comprises the measurement beam generating unit 15, an optical assembly 18, and the optical detecting unit 17.

The measurement beam generating unit 15 is configured to generate a measurement beam 16 and comprises a measurement beam generating source 27, e.g. a laser source, configured to generate the measurement beam 16, e.g. a laser beam.

The optical assembly 18 is configured to generate a plurality of measurement beams 16a, 16b extend in a vertical direction, i.e. typically in a (substantially) parallel direction to the energy beam 4 used for selectively irradiating and consolidating build material, through the process chamber 8 and intersecting each other at intersecting points P1 within the process chamber 8 and comprises a measurement beam splitter 19 configured to split the measurement beam 16 generated by the measurement beam generating unit 15 in two measurement beams 16a, 16b, an optical modulator 20, e.g. Bragg-cells, configured to modulate the two measurement beams 16a, 16b generated by the measurement beam splitter 19, and an optical refractor 21 (lens).

The optical refractor 21 is movably supported in at least one translatory degree of freedom of motion (indicated by arrow A1) and a rotatory degree of freedom of motion (indicated by arrow A2) so as to arbitrarily change the intersecting point P1 of the measurement beams 16a, 16b within the process chamber 8 by being moved in the respective degree of freedom of motion. The optical refractor 21 forms part of or is disposed in front of a beam entrance window 22 arranged in a horizontally extending process chamber wall (top-wall) allowing for the measurement beams 16a, 16b to enter the process chamber 8. The beam entrance window 22 may also be movably supported in at least one respective degree of freedom of motion.

The optical detecting unit 17 comprises at least one optical detector 23, e.g. a photo diode or photo multiplier. The optical detector 23 is movably supported in at least one translatory degree of freedom of motion and/or rotatory degree of freedom of motion (indicated by arrow A3) so as to arbitrarily change the detection region/volume in order to assure detection of the intersecting points P1 of the measurement beams 16a, 16b at different locations within the process chamber 8 by being moved in the respective degree of freedom of motion. The optical detector 23 forms part of or is disposed in front of a detection window 24 arranged in a vertically extending process chamber wall (side-wall) allowing for detecting of intersecting points P1 of the measurement beams 16a, 16b at different locations within the process chamber 8. The detection window 24 may also be movably supported in at least one respective degree of freedom of motion.

The evaluating unit 14 is assigned to the optical detecting unit 17 by a communication link and hence, communicates with the optical detecting unit 17 to evaluate the measurement values so as to determine the parameter suitable for characterizing the streaming properties of the gas stream.

According to the exemplary embodiment of Fig. 2, the optical determining device 12 is configured to optically determine the parameter suitable for characterizing the streaming properties of the gas stream on basis of light-sectioning.

According to this embodiment, the optical measuring unit 13 comprises a measurement beam generating unit 15 configured to generate a pulsed measurement beam 16 extending through the process chamber 8 parallel to the build plane 7 and an optical detecting unit 17 configured to detect scattered light generated by interactions between the measurement beam 16 and the gas stream, in particular interactions between the measurement beam 16 and non-consolidated build material particles 25 within the gas stream, in a detection region/volume within the process chamber 8.

Fig. 2 shows an exemplary configuration of the optical measuring unit 13. According to this exemplary configuration, the optical measuring unit 13 comprises the measurement beam generating unit 15 and the optical detecting unit 17.

The measurement beam generating 15 unit is configured to generate a pulsed measurement beam 16 and comprises a measurement beam generating source 27, e.g. a laser source, configured to generate the pulsed measurement beam 16, e.g. a pulsed laser beam, extending in a horizontal direction/plane through the process chamber 8, i.e. in a (substantially) perpendicular direction to the energy beam 4 used for selectively irradiating and consolidating build material 3, through the process chamber 8. The measurement beam generating unit 15 may be movably supported in at least one translatory and/or rotatory degree of freedom of motion so as to arbitrarily change the plane 28 in which the pulsed measurement beam 16 extends within the process chamber 8 by being moved in the respective degree of freedom of motion. The measurement beam generating unit 15 forms part of or is disposed in front of a beam entrance window 29 arranged in a vertically extending process chamber wall (side-wall) allowing for the measurement beam 16 to enter the process chamber 8. The beam entrance window 29 may also be movably supported in at least one respective degree of freedom of motion.

The optical detecting unit 17 is configured to detect tracer particles, i.e. non-consolidated build material particles 25 within the gas stream, in detection plane 28, i.e. the plane in which the measurement beam 16 extends, within the process chamber 8. The optical detecting unit 17 comprises an optical detector 23, e.g. a camera. The optical detector 17 may be movably supported in at least one translatory and/or rotatory degree of freedom of motion so as to arbitrarily change the detection plane 28 in order to assure detection of tracer particles in different detection planes 28 within the process chamber 8 by being moved in the respective degree of freedom of motion. The optical detector 23 forms part of or is disposed in front of a detection window 30 arranged in a horizontally extending process chamber wall (top-wall) allowing for detecting of tracer particles at different detecting planes within the process chamber 8. The detection window 30 may also be movably supported in at least one respective degree of freedom of motion.

The evaluating unit 14 is assigned to the optical detecting unit 17 by a communication link and hence, communicates with the optical detecting unit 17 to evaluate the measurement values so as to determine the parameter suitable for characterizing the streaming properties of the gas stream.

In both embodiments, the stream generating unit 9 may be configured to control the streaming properties of the gas stream, e.g. the streaming velocity, on basis of the determined parameter suitable for characterizing the streaming properties of the gas stream. Hence, on basis of the information on the streaming properties of the gas stream within the process chamber 8, a control loop may be implemented so as to control the streaming properties of the gas stream, i.e. to assure/maintain a gas stream with desired streaming properties.

Also in both embodiments, the apparatus 1 may further comprise an output interface unit 31 configured to output the at least one determined parameter suitable for characterizing the streaming properties of the gas stream or the streaming properties of the gas stream, respectively, particularly in at least one multi-dimensional representation of the streaming properties of the gas stream. The output interface unit 31 may comprise a graphical interface, e.g. a display, allowing for outputting a graphical representation of the output and/or may comprise a communication interface allowing for communicating a the output via a communication link, e.g. a communication network, to at least one communication partner.

## Claims

1. Apparatus (1) for additively manufacturing three-dimensional objects (2) by means of successive layerwise selective irradiation and consolidation of layers of a build material (3) which can be consolidated by means of an energy beam (4), the apparatus (1) comprising:
- a process chamber (8) comprising a build plane (7) in which layers of build material (3) are successively layerwise selectively irradiated and consolidated by means of an energy beam (4) during operation of the apparatus (1);
- a gas stream generating device (9) configured to generate a gas stream at least partly streaming through the process chamber (8) during operation of the apparatus (1), the gas stream being capable of being charged with non-consolidated build material particles (25), particularly smoke or smoke residues generated during operation of the apparatus (1), while streaming through the process chamber (8); and
- an optical determining device (12) configured to optically determine at least one parameter suitable for characterizing the streaming properties of the gas stream streaming through the process chamber (8) during operation of the apparatus (1) at at least one defined location within the process chamber (8), wherein the optical determining device comprises at least one optical measuring unit (13) configured to optically measure at least one measurement value within the process chamber (8), the measurement value being related to the gas stream, and at least one evaluating unit (14) configured to evaluate measurement values measured by the optical measuring unit (13) so as to determine the at least one parameter suitable for characterizing the streaming properties of the gas stream, wherein the at least one optical measuring unit (13) is configured to measure measurement values at different locations within the process chamber (8), wherein the optical measuring unit (13) is configured to measure a plurality of measurement values at different locations within the process chamber.

2. Apparatus according to Claim 1, wherein the evaluating unit (14) is configured to evaluate the plurality of measurement values so as to determine the at least one parameter suitable for characterizing the streaming properties of the gas stream in at least one multi-dimensional representation.

3. Apparatus according to Claim 1 or 2, wherein the optical determining device (12) is configured to optically determine at least one parameter suitable for characterizing the streaming properties of the gas stream on basis of laser-doppler-anemometry and/or on basis of light-sectioning.

4. Apparatus according to Claim 3, wherein the optical determining device (12) is configured to optically determine at least one parameter suitable for characterizing the streaming properties of the gas stream on basis of laser-doppler-anemometry, whereby
the or at least one optical measuring unit (13) being configured to optically measure at least one measurement value within the process chamber (8), the measurement value being related to the gas stream, comprises a measurement beam generating unit (15) configured to generate a plurality of measurement beams (16a, 16b) intersecting each other at an intersecting point (P1) of pre-definable coordinates within the process chamber (8) and an optical detecting unit (17) configured to detect the intersecting point (P1) of the measurement beams (16a, 16b) within the process chamber (8).

5. Apparatus according to Claim 4, wherein the measurement beam generating unit (15) is configured to generate a first plurality of measurement beams (16a, 16b) intersecting each other at a first intersecting point (P1) of pre-definable coordinates within the process chamber (8) and configured to generate a second plurality of measurement beams intersecting each other at a second intersecting point of pre-definable coordinates within the process chamber (8), and the optical detecting unit (17) is configured to detect the first and second intersecting points of the measurement beams within the process chamber (8).

6. Apparatus according to any of Claims 3 - 5, wherein the optical determining device (12) is configured to optically determine at least one parameter suitable for characterizing the streaming properties of the gas stream on basis of light-sectioning, whereby
the or at least one optical measuring unit (13) configured to optically measure at least one measurement value within the process chamber (8), the measurement value being related to the gas stream, comprises a measurement beam generating unit (15) configured to generate a pulsed measurement beam (16) extending through the process chamber (8), particularly parallel to the build plane (7), and an optical detecting unit (17) configured to detect scattered light generated by interactions between the measurement beam (16) and the gas stream, in particular non-consolidated build material particles (25) within the gas stream, in at least one detection region within the process chamber (8).

7. Apparatus according to any of the preceding Claims, wherein the least at least one parameter suitable for characterizing the streaming properties of the gas stream streaming through the process chamber (8) during operation of the apparatus (19 is the streaming velocity of the gas stream.

8. Apparatus according to any of the preceding Claims, wherein the stream generating unit (9) is configured to control the streaming properties of the gas stream on basis of the at least one determined parameter suitable for characterizing the streaming properties of the gas stream.

9. Apparatus according to any of the preceding Claims, comprising an output interface unit (31) configured to output the at least one determined parameter suitable for characterizing the streaming properties of the gas stream, particularly at least one multi-dimensional representation of the streaming properties of the gas stream.

## Patentansprüche

1. Vorrichtung (1) zur additiven Fertigung dreidimensionaler Objekte (2) mittels aufeinanderfolgender, schichtweiser selektiver Bestrahlung und Konsolidierung von Schichten eines Baumaterials (3), welches mittels eines Energiestrahls (4) konsolidiert werden kann, wobei die Vorrichtung (1) aufweist:
- eine Prozesskammer (8) aufweisend eine Bauebene (7) in der während des Betriebs der Vorrichtung (1) Schichten aus Baumaterial (3) aufeinanderfolgend schichtweise selektiv mittels eines Energiestrahls (4) bestrahlt und konsolidiert werden;
- eine Gasstromerzeugungsvorrichtung (9), die eingerichtet ist, einen Gasstrom zu erzeugen, der während des Betriebs der Vorrichtung (1) zumindest teilweise durch die Prozesskammer (8) strömt, wobei der Gasstrom während des Strömens durch die Prozesskammer (8) mit nicht-konsolidieren Baumaterialpartikeln (25) geladen werden kann, insbesondere Rauch oder Rauchrückstände, die während des Betriebs der Vorrichtung (1) entstehen; und
- eine optische Bestimmungsvorrichtung (12), die eingerichtet ist, zumindest einen Parameter, der sich zur Charakterisierung der Strömungseigenschaften des die Prozesskammer (8) durchströmenden Gasstroms eignet, während des Betriebs der Vorrichtung (1) an zumindest einem definierten Ort innerhalb der Prozessjammer (8) optisch zu bestimmen, wobei die optische Bestimmungsvorrichtung (12) mindestens eine optische Messeinheit (13), die eingerichtet ist, zumindest einem Messwert innerhalb der Prozesskammer (8) optisch zu messen, wobei der Messwert in Beziehung mit dem Gasstrom steht, sowie zumindest einer Auswerteeinheit (14) aufweist, die eingerichtet ist, Messwerte, die von der optischen Messeinheit (13) gemessen werden, zu bewerten, um den zumindest einen Parameter zu bestimmen, der sich zur Charakterisierung der Strömungseigenschaften des Gasstroms eignet, wobei die zumindest eine optische Messeinheit (13) eingerichtet ist, Messwerte an unterschiedlichen Orten innerhalb der Prozesskammer (8) zu messen, wobei die optische Messeinheit (13) eingerichtet ist, eine Vielzahl von Messwerten an unterschiedlichen Orten innerhalb der Prozesskammer zu messen.

2. Vorrichtung nach Anspruch 1, wobei die Auswerteeinheit (14) eingerichtet ist, die Vielzahl von Messwerten auszuwerten, um den zumindest einen Parameter zu bestimmen, der sich zur Charakterisierung der Strömungseigenschaften des Gasstroms in zumindest einer mehrdimensionalen Darstellung eignet.

3. Vorrichtung nach Anspruch 1 oder 2, wobei die optische Bestimmungsvorrichtung (12) eingerichtet ist, zumindest einen Parameter, der sich zur Charakterisierung der Strömungseigenschaften des Gasstroms eignet, auf Grundlage von Laser-Doppler-Anemometrie und/oder auf Grundlage von Lichtschnitt zu bestimmen.

4. Vorrichtung nach Anspruch 3, wobei die optische Bestimmungsvorrichtung (12) eingerichtet ist, zumindest einen Parameter, der sich zur Charakterisierung der Strömungseigenschaften des Gasstroms eignet, auf Grundlage von Laser-Doppler-Anemometrie zu bestimmen, wobei
die oder zumindest eine optische Messeinheit (13), die zur optischen Messung von zumindest einem Messwert innerhalb des Prozesskammer (8) eingerichtet ist, wobei der Messwert mit dem Gasstrom in Beziehung steht, eine Messstrahlerzeugungseinheit (15), die eingerichtet ist, eine Vielzahl von Messstrahlen (16a, 16b) zu erzeugen, die einander an einem Schnittpunkt (P1) vordefinierter Koordinaten innerhalb der Prozesskammer (8) schneiden, sowie eine optische Detektionseinheit (17), die eingerichtet ist, den Schnittpunkt (P1) der Messstrahlen (16a, 16b) innerhalb der Prozesskammer (8) zu detektieren, aufweist.

5. Vorrichtung nach Anspruch 4, wobei die Messstrahlerzeugungseinheit (15) eingerichtet ist, eine erste Vielzahl von Messstrahlen (16a, 16b) zu erzeugen, die einander an einem ersten Schnittpunkt (P1) vordefinierbarer Koordinaten innerhalb der Prozesskammer (8) schneiden, und eingerichtet ist, eine zweite Vielzahl von Messstrahlen zu erzeugen, die einander an einem zweiten Schnittpunkt vordefinierbarer Koordinaten innerhalb des Prozesskammer (8) schneiden, und die optische Detektionseinheit (17) eingerichtet ist, den ersten und zweiten Schnittpunkt der Messstrahlen innerhalb der Prozesskammer (8) zu detektieren.

6. Vorrichtung nach einem der Ansprüche 3 bis 5, wobei die optische Bestimmungsvorrichtung (12) zur optischen Bestimmung zumindest eines Parameters eingerichtet ist, der geeignet ist, die Strömungseigenschaften des Gasstroms auf Grundlage von Lichtschnitt zu charakterisieren, wobei die oder zumindest eine optische Messeinheit (13), die zur optischen Messung von zumindest einem Messwert innerhalb der Prozesskammer (8) eingerichtet ist, wobei der Messwert mit dem Gasstrom in Beziehung steht, eine Messstrahlerzeugungseinheit (15), die zur Erzeugung eines gepulsten Messstrahls (16) eingerichtet ist, der durch die Prozesskammer (8) läuft, insbesondere parallel zur Bauebene (7), sowie eine optische Detektionseinheit (17) aufweist, die eingerichtet ist, gestreutes Licht, welches durch Wechselwirkungen zwischen dem Messstrahl (16) und dem Gasstrom, insbesondere nicht-konsolidierter Baumaterialpartikel (25) innerhalb des Gasstroms, erzeugt wird, in zumindest einem Detektionsbereich innerhalb der Prozesskammer (8) zu detektieren.

7. Vorrichtung nach einem der vorstehenden Ansprüche, wobei der zumindest eine Parameter, der geeignet ist, die Strömungseigenschaften des während des Betriebs der Vorrichtung (1) die Prozesskammer (8) durchströmenden Gasstroms zu charakterisieren, die Strömungsgeschwindigkeit des Gasstroms ist.

8. Vorrichtung nach einem der vorstehenden Ansprüche, wobei die Stromerzeugungseinheit (9) eingerichtet ist, die Strömungseigenschaften des Gasstroms auf Grundlage des zumindest einen bestimmten Parameters, der sich zur Charakterisierung der Strömungseigenschaften des Gasstroms eignet zu regeln.

9. Vorrichtung nach einem der vorstehenden Ansprüche, aufweisend eine Ausgabeschnittstelleneinheit (31), die eingerichtet ist, den zumindest einen bestimmten Parameter auszugeben, der zur Charakterisierung der Strömungseigenschaften des Gasstroms geeignet ist, insbesondere zumindest eine mehrdimensionale Darstellung der Strömungseigenschaften des Gasstroms.

## Revendications

1. Appareil (1) pour la fabrication additive d'objets tridimensionnels (2) au moyen d'une irradiation et d'une consolidation sélectives successives couche par couche de couches d'un matériau de construction (3) qui peut être consolidé au moyen d'un faisceau d'énergie (4), l'appareil (1) comprenant :
- une chambre de traitement (8) comprenant un plan de construction (7) dans lequel des couches de matériau de construction (3) sont sélectivement et successivement irradiées et consolidées couche par couche au moyen d'un faisceau d'énergie (4) pendant un fonctionnement de l'appareil (1) ;
- un dispositif de génération de flux de gaz (9) configuré pour générer un flux de gaz circulant au moins partiellement à travers la chambre de traitement (8) pendant un fonctionnement de l'appareil (1), le flux de gaz étant capable d'être chargé avec des particules de matériau de construction non consolidé (25), en particulier de la fumée ou des résidus de fumée générés pendant un fonctionnement de l'appareil (1), tout en circulant à travers la chambre de traitement (8) ; et
- un dispositif de détermination optique (12) configuré pour déterminer optiquement au moins un paramètre adapté à la caractérisation des propriétés de circulation du flux de gaz circulant à travers la chambre de traitement (8) pendant un fonctionnement de l'appareil (1) et au moins un emplacement défini à l'intérieur de la chambre de traitement (8), dans lequel le dispositif de détermination optique comprend au moins une unité de mesure optique (13) configurée pour mesurer optiquement au moins une valeur de mesure à l'intérieur de la chambre de traitement (8), la valeur optique étant associée au flux de gaz, et au moins une unité d'évaluation (14) configurée pour évaluer des valeurs de mesure mesurées par l'unité de mesure optique (13) pour déterminer l'au moins un paramètre adapté à la caractérisation des propriétés de circulation du flux de gaz, dans lequel l'au moins une unité de mesure optique (13) est configurée pour mesurer des valeurs de mesure au niveau de différents emplacements à l'intérieur de la chambre de traitement (8), dans lequel l'unité de mesure optique (13) est configurée pour mesurer une pluralité de valeurs de mesure au niveau de différents emplacements à l'intérieur de la chambre de traitement.

2. Appareil selon la revendication 1, dans lequel l'unité d'évaluation (14) est configurée pour évaluer la pluralité de valeurs de mesure de manière à déterminer l'au moins un paramètre adapté à la caractérisation des propriétés de circulation du flux de gaz dans au moins une représentation multidimensionnelle.

3. Appareil selon la revendication 1 ou 2, dans lequel le dispositif de détermination optique (12) est configuré pour déterminer optiquement au moins un paramètre adapté à la caractérisation des propriétés de circulation du flux de gaz sur la base d'une anémométrie laser Doppler et/ou sur la base d'un sectionnement de lumière.

4. Appareil selon la revendication 3, dans lequel le dispositif de détermination optique (12) est configuré pour déterminer optiquement au moins un paramètre adapté à la caractérisation des propriétés de circulation du flux de gaz sur la base d'une anémométrie laser Doppler, moyennant quoi l'unité ou l'au moins une unité de mesure optique (13) configurée pour mesurer optiquement au moins une valeur de mesure à l'intérieur de la chambre de traitement (8), la valeur de mesure étant associée au flux de gaz, comprend une unité de génération de faisceau de mesure (15) configurée pour générer une pluralité de faisceaux de mesure (16a, 16b) se croisant au niveau d'un point d'intersection (P1) de coordonnées pouvant être prédéfinies à l'intérieur de la chambre de traitement (8) et une unité de détection optique (17) configurée pour détecter le point d'intersection (P1) des faisceaux de mesure (16a, 16b) à l'intérieur de la chambre de traitement (8).

5. Appareil selon la revendication 4, dans lequel l'unité de génération de faisceau de mesure (15) est configurée pour générer une première pluralité de faisceaux de mesure (16a, 16b) se croisant au niveau d'un premier point d'intersection (P1) de coordonnées pouvant être prédéfinies à l'intérieur de la chambre de traitement (8) et configurées pour générer une seconde pluralité de faisceaux de mesure se croisant au niveau d'un second point d'intersection de coordonnées pouvant être prédéfinies à l'intérieur de la chambre de traitement (8), et l'unité de détection optique (17) est configurée pour détecter les premier et second points d'intersection des faisceaux de mesure à l'intérieur de la chambre de traitement (8).

6. Appareil selon l'une quelconque des revendications 3-5, dans lequel le dispositif de détermination optique (12) est configuré pour déterminer optiquement au moins un paramètre adapté à la caractérisation des propriétés de circulation du flux de gaz sur la base d'un sectionnement de lumière, moyennant quoi l'unité ou l'au moins une unité de mesure optique (13) configurée pour mesurer optiquement au moins une valeur de mesure à l'intérieur de la chambre de traitement (8), la valeur de mesure étant associée au flux de gaz, comprend une unité de génération de faisceau de mesure (15) configurée pour générer un faisceau de mesure à impulsions (16) s'étendant à travers la chambre de traitement (8), en particulier parallèle au plan de construction (7), et une unité de détection optique (17) configurée pour détecter une lumière diffusée générée par des interactions entre le faisceau de mesure (16) et le flux de gaz, en particulier des particules de matériau de construction non consolidé (25) à l'intérieur du flux de gaz, dans au moins une région de détection à l'intérieur de la chambre de traitement (8).

7. Appareil selon l'une quelconque des revendications précédentes, dans lequel l'au moins un paramètre adapté à la caractérisation des propriétés de circulation du flux de gaz circulant à travers la chambre de traitement (8) pendant un fonctionnement de l'appareil (19) est la vitesse de circulation du flux de gaz.

8. Appareil selon l'une quelconque des revendications précédentes, dans lequel l'unité de génération de flux (9) est configurée pour commander les propriétés de circulation du flux de gaz sur la base de l'au moins un paramètre déterminé adapté à la caractérisation des propriétés de circulation du flux de gaz.

9. Appareil selon l'une quelconque des revendications précédentes, comprenant une unité d'interface de sortie (31) configurée pour délivrer en sortie l'au moins un paramètre déterminé adapté à la caractérisation des propriétés de circulation du flux de gaz, en particulier au moins une représentation multidimensionnelle des propriétés de circulation du flux de gaz.
